# EUROPEAN PATENT APPLICATION

(11) **EP 2 781 863 A2**
(43) Date of publication of application: **24.09.2014**
(21) Application number: 13190296.7
(22) Date of filing: 25.10.2013
(51) Int. Cl.: F25D 11/02, F25D 29/00

(54) **Method for controlling refrigerator**

(30) Priority: 22.03.2013 KR 20130031037
(71) Applicant: LG Electronics, Inc., Seoul 150-721 (KR)
(72) Inventor: Shin, Jaehoon, 153-802 Seoul (KR); Sul, Heayoun, 153-802 Seoul (KR); Seo, Changho, 153-802 Seoul (KR); Park, Yongjoo, 153-802 Seoul (KR)
(74) Representative: Vossius & Partner

(57) **Abstract**

A method for controlling a refrigerator includes driving a compressor, operating a switching valve to allow a refrigerant to flow into at least one main expansion valve, opening a cool air passage connecting a refrigerating compartment to a main evaporator to cool the refrigerating compartment, operating the switching valve to switching a flow direction of the refrigerant into at least one deep-freezing expansion valve when a temperature of the refrigerating compartment is cooled to a temperature lower than a set temperature, thereby cooling the deep-freezing storage chamber, and operating the heater.

## Description

### BACKGROUND

The present disclosure relates to a method for controlling a refrigerator.

Refrigerators are home appliances for storing foods at a low temperature. Generally, a refrigerator includes a refrigerating compartment for storing foods in a refrigerated state and a freezing compartment for storing foods in a frozen state.

Recently, demand for refrigerators including a separate storage chamber for cooling foods within a short time period to an ultralow temperature has increased. To achieve the above-described objects, a separate deep-freezing storage chamber is provided within a freezing compartment. Also, a structure is provided in which cool air within a vaporizing chamber is independently supplied into the deep-freezing storage chamber through a cool air passage connecting the deep-freezing storage chamber to the vaporizing chamber. In the related art, since the cool air within the vaporizing chamber is separately supplied into only the deep-freezing storage chamber, the deep-freezing storage chamber may have a temperature lower than that of the freezing compartment without having an influence on the temperatures of the freezing compartment and the refrigerating compartment.

Generally refrigerators use an R-600a isobutene refrigerant to lower a temperature of an evaporator to a temperature of about -40°C to about -42°C. However, the deep-freezing storage chamber may require a temperature lower than that of the evaporator, i.e., a temperature of about -50°C. For this, it may be insufficient to use only the separate deep-freezing storage chamber.

To satisfy the demand of cooling the deep-freezing storage chamber as described above, a suction pipe connecting the evaporator to a compressor may heat-exchange with an expansion valve. In detail, in the case where the suction pipe and the expansion valve are heat-exchanged to reduce an evaporation temperature, the refrigerant passing through the expansion valve may further decrease in temperature to increase a heat absorption capacity, thereby increasing a cooling ability. However, since an evaporation pressure itself is not decreased, it may be difficult to decrease the evaporation temperature.

To solve the above-described limitation, an expansion valve having a smaller diameter may be used. In this case, although the evaporation pressure is decreased, a saturation achievement rate of the refrigerant may be further reduced when the evaporator absorbs heat to lower the temperature of the deep-freezing storage chamber to a set temperature. Specifically, the reduction in the saturation achievement rate of the refrigerant represents the reduction in an amount of refrigerant which is saturated to generate a gas by passing through the evaporator. That is, an amount of liquid refrigerant introduced into a gas/liquid separator is greater than that of gas refrigerant. As a result, the possibility in the introduction of the liquid refrigerant into the compressor may be further increased. Thus, a condensation pressure and an evaporation pressure in the whole refrigeration cycle may be further increased. Furthermore, the liquid refrigerant may be introduced into the compressor and deteriorate the performance of the compressor or damage the compressor.

### SUMMARY

One or more embodiments provide a refrigerator in which a temperature of a deep-freezing storage chamber is further lowered than that of a deep-freezing storage chamber according to a related art to minimize damage of a compressor, and a method for controlling the same.

In one embodiment, a method for controlling a refrigerator including: a compressor to compress a refrigerant; a condenser connected to an outlet-side of the compressor to condense the refrigerant; a switching valve connected to an outlet-side of the condenser; an expansion member connected parallel to an outlet-side of the switching valve, the expansion member including at least one main expansion valve and at least one deep-freezing expansion valve; a main evaporator to cool air supplied to at least one of a refrigerating compartment and a freezing compartment, the main evaporator being connected to an outlet-side of the at least one main expansion valve; a deep-freezing evaporator cooling cool air supplied into a deep-freezing storage chamber which is maintained at a temperature lower than that of the freezing compartment, the deep-freezing evaporator being connected to the outlet-side of the at least one deep-freezing expansion valve; and a heater contacting the at least one deep-freezing expansion valve includes: driving the compressor; operating the switching valve to allow the refrigerant to flow into the at least one main expansion valve; opening a cool air passage connecting the refrigerating compartment to the main evaporator to cool the refrigerating compartment; operating the switching valve to switch a flow direction of the refrigerant into the at least one deep-freezing expansion valve when a temperature of the refrigerating compartment is cooled to a temperature lower than a set temperature, thereby cooling the deep-freezing storage chamber; and operating the heater.

The details of one or more embodiments are set forth in the accompanying drawings and the description below. Other features will be apparent from the description and drawings, and from the claims.

### BRIEF DESCRIPTION OF THE DRAWINGS

Fig. 1 is a view illustrating a refrigeration cycle of a refrigerator according to one embodiment.

Fig. 2 is a p-h diagram for comparing the refrigeration cycle according to one embodiment to a general refrigeration cycle according to a related art.

Fig. 3 is a flowchart illustrating a method for controlling a temperature of a deep-freezing storage chamber in the refrigerator according to one embodiment.

### DETAILED DESCRIPTION OF THE EMBODIMENTS

In the following detailed description of the preferred embodiments, reference is made to the accompanying drawings in which is shown by way of illustration specific preferred embodiments in which the invention may be practiced. The embodiments are described in sufficient detail to enable those skilled in the art to practice the invention, and it is understood that other embodiments may be utilized. Logical, structural, mechanical, electrical, and chemical changes may be made without departing from the scope of the invention. To avoid details not necessary to enable those skilled in the art to practice the invention, descriptions of certain information known to those skilled in the art may be omitted. The following detailed description is, therefore, not to be taken in a limiting sense, and the scope of the present disclosure is defined by the appended claims.

Hereinafter, a refrigerator and a method for controlling the refrigerator according to one embodiment will be described in detail with reference to the accompanying drawings.

A method for controlling a refrigerator including: a compressor to compress a refrigerant; a condenser connected to an outlet-side of the compressor to condense the refrigerant; a switching valve connected to an outlet-side of the condenser; an expansion member connected parallel to an outlet-side of the switching valve, the expansion member including at least one main expansion valve and at least one deep-freezing expansion valve; a main evaporator to cool air supplied to at least one of a refrigerating compartment and a freezing compartment, the main evaporator being connected to an outlet-side of the at least one main expansion valve; a deep-freezing evaporator to cool air supplied into a deep-freezing storage chamber which is maintained at a temperature lower than that of the freezing compartment, the deep-freezing evaporator being connected to the outlet-side of the at least one deep-freezing expansion valve; and a heater contacting the at least one deep-freezing expansion valve includes: driving the compressor; operating the switching valve to allow the refrigerant to flow into the at least one main expansion valve; opening a cool air passage connecting the refrigerating compartment to the main evaporator to cool the refrigerating compartment; operating the switching valve to switch a flow direction of the refrigerant into the at least one deep-freezing expansion valve when a temperature of the refrigerating compartment is cooled to a temperature lower than a set temperature, thereby cooling the deep-freezing storage chamber; and operating the heater.

Also, in the method for controlling the refrigerator according to one embodiment, the refrigerator may be controlled so that an evaporation temperature (pressure) of the refrigerant passing through a deep-freezing expansion value is less than that of the refrigerant passing through the main expansion valve due to the operation of the heater.

Futher, when the cooling of the deep-freezing storage chamber starts, the compressor may be driven at an output torque greater than that of the compressor in the cooling of the refrigerating compartment. The compressor may be driven at a maximum output torque.

The method for controlling the refrigerator according to one embodiment may further include driving a deep-freezing chamber fan when the compressor driving condition is changed, a set time elapses from a time point at which the switching valve is switched, or the deep-freezing evaporator is lowered to a set temperature.

When the set time elapses from one of the time point at which the switching valve is switched, the time point at which the compressor driving condition is changed, and a time point at which the driving of the deep-freezing chamber fan starts, the heater may be driven.

Also, when the deep-freezing storage chamber is cooled to the set temperature, the compressor and the deep-freezing chamber fan are stopped.

When the compressor is stopped, the switching valve is switched to a position at which the refrigerant is introduced into the main expansion valve.

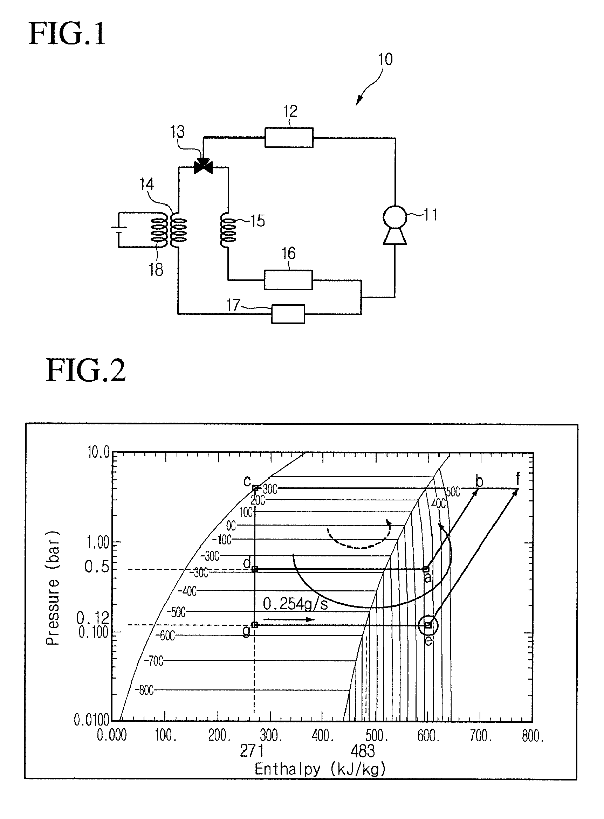

Fig. 1 is a view illustrating a refrigeration cycle of a refrigerator according to one embodiment.

Referring to Fig. 1, a refrigeration cycle 10 of a refrigerator according to one embodiment includes a compressor 11 compressing a refrigerant into a high-temperature high-pressure gas state; a condenser 12 disposed on an outlet-side of the compressor 11 to phase-change the high-temperature high-pressure gas refrigerant into a high-temperature high-pressure liquid refrigerant; expansion valves 14 and 15 disposed on an outlet-side of condenser 12 to expand the high-temperature high-pressure liquid refrigerant cooled by passing through condenser 12, thereby changing the high-temperature high-pressure liquid refrigerant into a low-temperature low-pressure two-phase refrigerant; and evaporators 16 and 17 respectively disposed on outlet-sides of expansion valves 14 and 15 to phase-change the low-temperature low-pressure two-phase refrigerant which is changed in phase by passing through expansion valves 14 and 15 into a low-temperature low-pressure liquid refrigerant.

Specifically, compressor 11 includes a linear compressor. Alternatively, compressor 11 may include a fixed speed or inverter compressor. When compressor 11 includes the linear compressor, compressor 11 is controlled so that a top dead center operation is performed in a deep-freezing cooling process.

Generally, compressor 12 may be accommodated in a machine room disposed in a rear side of the refrigerator to release heat to indoor air. Also, a switching valve 13 including a three-way valve may be disposed between condenser 12 and expansion valves 14 and 15. Switching valve 13 is used for switching a flow direction of the refrigerant in a structure in which main evaporator 16 is used for cooling the refrigerating compartment and the freezing compartment, and deep-freezing evaporator 17 is used for cooling the deep-freezing storage chamber are connected to parallel to each other. Here, the three-way valve or a four-way valve may be used according to the number of evaporators. For example, when one main evaporator is used, and thus, a cool air passage connecting the refrigerating compartment to the freezing compartment is switched to independently control a temperature of each of the storage compartments, the three-way valve may be used. On the other hand, in a structure in which an evaporator for the refrigerating compartment, an evaporator for the freezing compartment, and an evaporator for the deep-freezing evaporator are separately provided and connected parallel to each other, the four-way valve may be applied to switch the flow direction of the refrigerant.

In the current embodiment for example, the structure in which one main evaporator 16 is used to cool the refrigerating compartment and the freezing compartment, and a separate deep-freezing evaporator 17 for cooling the deep-freezing storage chamber is parallely connected to main evaporator 16 will be described as an example. Thus, main expansion valve 15 and deep-freezing expansion valve 14 may be respectively disposed on inlet-sides of main evaporator 16 and deep-freezing evaporator 17, and expansion valves 14 and 15 are connected in parallel to the outlet-side of switching valve 13.

Also, a separate heater 18 may be mounted on an outer circumferential surface of deep-freezing expansion valve 14 to reduce a temperature of the refrigerant passing through deep-freezing expansion valve 14 to a temperature lower than that of the freezing compartment. Heater 18 is operated in an operation mode for cooling the deep-freezing storage chamber. When the deep-freezing storage chamber is cooled to a set temperature, heater 18 may be stopped.

Also, a condensation fan and an evaporation fan may be respectively mounted outside condenser 12 and evaporators 16 and 17 to heat-exchange the indoor air with the refrigerant or air within the storage chamber with the refrigerant.

Fig. 2 is a p-h diagram for comparing the refrigeration cycle according to an embodiment to a general refrigeration cycle according to a related art.

Referring to Fig. 2, in the general refrigeration cycle according to the related art, and compression, condensation, expansion, and evaporation are performed in an order of points a, b, c, and d.

On the other hand, in the refrigeration cycle according to the present disclosure, i.e., the refrigeration cycle including heater 18 on the outer circumferential surface of deep-freezing expansion valve 14, compression, condensation, expansion, and evaporation are performed in an order of points e, f, c, and g.

As shown in the p-h diagram, when heater 18 mounted on deep-freezing expansion valve 14 is driven, the refrigerant passing through deep-freezing expansion valve 14 may be dropped to an evaporation pressure lower than that in the refrigerant cycle according to the related art. Specifically, since the evaporation pressure is lowered, the evaporation temperature is lowered. Thus, since the evaporation temperature is lowered, cool air within the deep-freezing storage chamber may be lower in temperature than that of cool air according to the related art.

The general refrigeration cycle according to the related art in the p-h diagram of Fig. 2 represents a cycle diagram when any heat-exchange member is not provided to the expansion valve. In a case of a structure in which a suction pipe is heat-exchanged with the expansion valve, heat may be transferred from the refrigerant passing through the expansion valve to the refrigerant passing through the suction pipe, an amount of gas refrigerant of the refrigerant introduced into the compressor may be increased. Then, the refrigerant passing through the expansion valve may be decreased in temperature. Thus, an enthalpy line (c-d line) of the refrigerant may be further shifted to the left in the p-h diagram. As a result, an enthalpy valve of the refrigerant at an inlet of the evaporator may be decreased. That is, an amount of heat absorbed into the evaporator may be increased to increase cooling capacity. However, although the heat exchange may be performed through the suction pipe, since the evaporation pressure is not changed, it may be difficult to further reduce the temperature of the cool air within the deep-freezing storage chamber even though the cooling capacity is increased.

Also, in a case where the deep-freezing expansion valve has a diameter less than that of the main expansion valve, a refrigerant state point (point d) when the expansion is completed, i.e., an evaporation pressure at the inlet of the deep-freezing evaporator may be further decreased, and also, an enthalpy valve at the deep-freezing evaporator may be increased. That is, in the p-h diagram, the point d may be shifted down and to the right. As a result, the refrigerant may be further decreased in temperature to decrease the temperature of the deep-freezing storage chamber. However, due to the decrease in the temperature of the deep-freezing storage chamber, an amount of refrigerant which is changed in phase from the liquid refrigerant to the gas refrigerant in the refrigerant passing through the evaporator may be reduced. That is, if it is assumed that the refrigerant passing through the evaporator absorbs energy having the same heat from the indoor air, an amount of refrigerant which is changed in phase from the liquid refrigerant to the gas refrigerant may be reduced. This may represent the reduction in a saturation achievement rate of the refrigerant. As a result, possibility of the introduction of the liquid refrigerant into the compressor may be further increased.

As proposed in the current embodiment, when heater 18 is mounted on the surface of deep-freezing expansion valve 14, outlet point d of the deep-freezing expansion valve (or the outlet point of the deep-freezing evaporator) may be moved to point g in an ideal state. In an actual refrigeration cycle, point g may be located at a point that is further shifted to the right.

If it is assumed that the evaporator absorbs the energy having the same heat, quality of the refrigerant at the inlet of the compressor, i.e., quality of the refrigerant at an inlet of a gas/liquid separator may be further increased in the current embodiment when compared to the case in which the expansion valve is changed in diameter. This may represent that the saturation achievement rate of the refrigerant is not reduced. Thus, the possibility of the introduction of the liquid refrigerant into the compressor may be significantly decreased.

Hereinafter, a method for controlling a temperature of the deep-freezing storage chamber in the refrigerator having the refrigeration cycle according to one embodiment will be described in detail with reference to the flowchart.

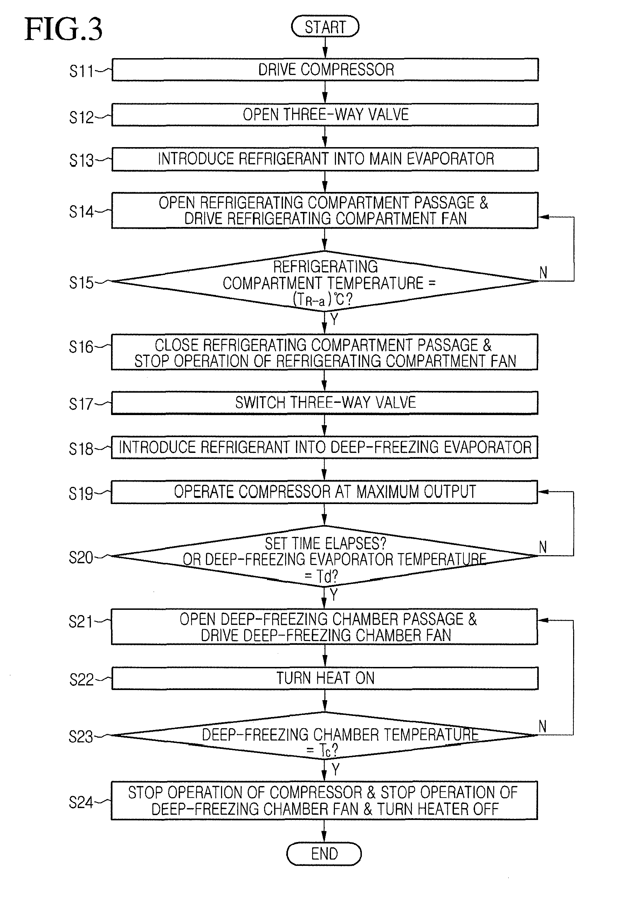

Fig. 3 is a flowchart illustrating a method for controlling a temperature of the deep-freezing storage chamber in the refrigerator according to an embodiment.

Referring to Fig. 3, a compressor is driven (S11). Here, a pre-cooling process for cooling a refrigerating compartment to a temperature lower than a set temperature may be previously performed.

Specifically, a switching valve, i.e., a three-way valve may be opened while the compressor is driven to control a refrigerant passage so that a refrigerant flows toward a main evaporator 16 (S12). Then, the refrigerant compressed by compressor 11 passes through a condenser 12 and then is introduced into a main expansion valve 15 and thus is expanded. The expanded low-temperature low-pressure two-phase refrigerant is introduced into a main evaporator 16 (S13) to decrease a temperature of the evaporator to a temperature of about -42°C. In this state, a damper (not shown) provided in a cool air passage may be operated to open a refrigerating compartment passage, and simultaneously, a refrigerating compartment fan may be operated (S14). Here, if the refrigerating compartment fan is not separately provided, a cooling fan disposed on a side of main evaporator 16 may be driven.

If the refrigerating compartment fan or the cooling fan disposed on the side of main evaporator 16 is operated, the refrigerant cooled in the evaporator may be guided to the refrigerating compartment along the refrigerating compartment passage. As a result, an internal temperature of the refrigerating compartment may be gradually decreased.

Whether the refrigerating compartment temperature reaches a set temperature (T_{R}-a)°C may be determined by a temperature sensor and a controller (S15). In the control method according to the current embodiment, the refrigerating compartment temperature may be lowered to a temperature about (a) °C less than the set temperature to perform a deep-freezing cooling process, thereby preventing a load of the refrigerating compartment from being increased in the deep-freezing cooling process. Thus, the controller may maintain the cooling of the refrigerating compartment until a temperature signal transmitted from a refrigerating temperature sensor reaches a temperature slightly lower than a set temperature T_{R}.

Specifically, when it is determined that the refrigerating compartment temperature reaches a temperature lower than the set temperature T_{R}, the refrigerating compartment passage may be closed by the damper, and then the operation of the refrigerating compartment fan is stopped (S16). Here, if the separate refrigerating compartment fan is not provided, and only the cooling fan of the main evaporator is provided, the cooling fan may be continuously operated to cool a freezing compartment.

Also, although only the overcooling process for further lowering the temperature of the refrigerating compartment to a temperature lower than the set temperature T_{R} is performed, the present disclosure is not limited thereto. For example, an overcooling process for further lowering a temperature of the freezing compartment may be performed together. In a case of the freezing compartment, since a temperature within the refrigerator is maintained to a temperature lower than a freezing temperature, foods are not significantly changed in phase due to the overcooling. Thus, even though the freezing compartment temperature is in the present set temperature state, the cool air may be supplied into the freezing compartment in the overcooling process for the refrigerating compartment. Alternatively, the supplying of the cool air into the freezing compartment may be blocked to save on power consumption.

When the overcooling process for the refrigerating compartment is ended, the three-way valve may be switched (S17) to allow the refrigerant to flow toward deep-freezing evaporator 17, thereby performing a deep-freezing cooling process. Here, when the deep-freezing cooling process starts, the operation condition of compressor 11, which is performed in the overcooling process for the refrigerating compartment may be changed. That is, to cool the deep-freezing storage chamber to the set temperature for a short time, compressor 11 may be converted into a maximum output operation mode (S19). For example, when compressor 11 includes a linear compressor, the operation mode may be converted from a normal operation condition to a top dead center operation condition.

Here, when a deep-freezing chamber fan is operated just when the deep-freezing cooling process is performed, hot air may be guided into the deep-freezing storage chamber to deteriorate deep-freezing performance. Thus, it may be important that the deep-freezing chamber fan is operated in a state where deep-freezing evaporator 17 is sufficiently cooled.

Thus, a process for determining whether a set time elapses from a time point at which an operation condition of the compressor is converted into the maximum output operation condition or a time point at which the three-way valve is switched, or whether the evaporator temperature transmitted from the temperature sensor attached to deep-freezing evaporator 17 reaches a set temperature T_{d} may be performed (S20). If it is determined that the set time elapses, or the deep-freezing evaporator temperature reaches the set temperature T_{d}, a deep-freezing chamber passage may be opened by an operation of the damper, and simultaneously, the deep-freezing chamber fan may be operated (S21).

Also, when the set time elapses from one of the time point at which the switching valve is switched, the time point at which the compressor is changed in driving condition, and time point at which the driving of the deep-freezing chamber fan starts, the heater may be turned on (S22). According to this system, a time point at which the deep-freezing chamber temperature is cooled to a temperature lower than the refrigerating compartment temperature, i.e, a time point at which the deep-freezing cooling is realized may be a time point after the heater is operated.

Also, if it is determined that the deep-freezing storage chamber temperature is cooled to a set temperature T_{c} (S23), the compressor, the deep-freezing chamber fan, and the heater may be stopped in operation (S24). Here, switching valve 13 may return to its original position, i.e., a position at which the refrigerant is introduced toward main expansion valve 15.

According to the above-described control method, since the deep-freezing storage chamber temperature is quickly cooled to a temperature significantly lower than the freezing compartment temperature, the compressor is not affected in performance and strength thereof.

According to the method for controlling the refrigerator including the above-described embodiments, the separate heater may be provided to the expansion valve connected to the inlet-side of the evaporator for the deep-freezing storage chamber to further decrease the evaporator pressure when compared to that in the related art. Thus, the evaporator may be lowered up to a temperature of a maximum -50°C. Additionally, the deterioration in the saturation achievement rate of the refrigerant which occurs when the expansion valve is changed in diameter do not occur, preventing the compressor from being deteriorated in performance or damaged.

Although embodiments have been described with reference to a number of illustrative embodiments thereof, it should be understood that numerous other modifications and embodiments can be devised by those skilled in the art that will fall within the scope of the principles of this disclosure. More particularly, variations and modifications are possible in the component parts and/or arrangements of the subject combination arrangement within the scope of the disclosure, the drawings, and the appended claims. In addition to variations and modifications in the component parts and/or arrangements, alternative uses will also be apparent to those skilled in the art.

## Claims

1. A method for controlling a refrigerator (10) comprising: a compressor (11) to compress a refrigerant; a condenser (12) connected to an outlet-side of the compressor to condense the refrigerant; a switching valve (13) connected to an outlet-side of the condenser; an expansion member (14, 15) connected parallel to an outlet-side of the switching valve, the expansion member comprising at least one main expansion valve (15) and at least one deep-freezing expansion valve (14); a main evaporator (16) to cool air supplied to at least one of a refrigerating compartment and a freezing compartment, the main evaporator (16) being connected to an outlet-side of the at least one main expansion valve (15); a deep-freezing evaporator (17) to cool air supplied into a deep-freezing storage chamber which is maintained at a temperature lower than that of the freezing compartment, the deep-freezing evaporator (17) being connected to the outlet-side of the at least one deep-freezing expansion valve (14); and a heater (18) contacting the at least one deep-freezing expansion valve (14), the method comprising:
driving the compressor (11);
operating the switching valve (13) to allow the refrigerant to flow into the at least one main expansion valve (15);
opening a cool air passage connecting the refrigerating compartment to the main evaporator (16) to cool the refrigerating compartment;
operating the switching valve (13) to switch a flow direction of the refrigerant into the at least one deep-freezing expansion valve (14) when a temperature of the refrigerating compartment is cooled to a temperature lower than a set temperature, thereby cooling the deep-freezing storage chamber; and
operating the heater (18).

2. The method of claim 1, wherein the operation of the heater (18) is controlled so that an evaporation temperature/ pressure of the refrigerant passing through the at least one deep-freezing expansion valve (14) is lowered to a temperature lower than that of the refrigerant passing through the at least one main expansion valve (15).

3. The method of claim 1 or 2, wherein, in the cooling of the deep-freezing storage chamber, the compressor (11) is driven at an output greater than that in the cooling of the refrigerating compartment.

4. The method of claim 3, wherein, in the cooling of the deep-freezing storage chamber, the compressor (11) is driven at a maximum output.

5. The method of claim 4, further comprising:
driving a deep-freezing chamber fan when a set time elapses after the compressor (11) starts to be driven at the maximum output, a set time elapses from a time point at which the switching valve (13) is switched, or the temperature of the deep-freezing evaporator (17) is lower than a set temperature.

6. The method of claim 5, wherein the heater (18) is operated when the set time elapses from one of the time point at which the switching valve (13) is switched, the time point at which the compressor (11) operation condition is changed, and the time point at which the deep-freezing chamber fan is operated.

7. The method of claim 5 or 6, wherein the compressor (11) and the deep-freezing chamber fan operation are stopped when the deep-freezing storage chamber is cooled to a temperature lower than a predetermined temperature.

8. The method of claim 7, wherein the switching valve (13) is switched to a position at which the refrigerant is introduced into the at least one main expansion valve (15) when the compressor (11) operation is stopped.
